# EUROPEAN PATENT SPECIFICATION

(11) **EP 0 305 155 B1**
(45) Date of publication and mention of the grant of the patent: **03.11.1993**
(21) Application number: 88307823.0
(22) Date of filing: 24.08.1988
(51) Int. Cl.: C08J 5/22

(54) **A reinforced ion exchange membrane and a process for producing the same**
Verstärkte Ionenaustauschermembran und Verfahren zur Herstellung derselben
Membrane échangeuse d'ions renforcée et procédé pour sa fabrication

(30) Priority: 26.08.1987 JP 210335/87
(43) Date of publication of application: 01.03.1989
(73) Proprietor: Asahi Kasei Kogyo Kabushiki Kaisha, Osaka-shi Osaka 530 (JP)
(72) Inventor: Tsushima, Sakae, Yokohama-shi Kanagawa-ken (JP); Imauchi, Toshio, Yokohama-shi Kanagawa-ken (JP)
(74) Representative: Blake, John Henry Francis

(56) References cited:
- EP-A- 0 056 707
- EP-A- 0 167 885
- US-A- 4 072 793
- US-A- 4 399 183
- US-A- 4 650 551

## Description

### Background Of The Invention

### Field Of The Invention

The present invention relates to a reinforced ion exchange membrane and a process for producing the same. More particularly, the present invention is concerned with a reinforced ion exchange membrane comprising a fluorinated ion exchange resin and, encapsulated therein, a reinforcing plain woven fabric having an openness of at least 55 %, which membrane is free of sacrificial strands between adjacent warp strands and between adjacent weft strands of the fabric and free of channels formed by removal of the sacrificial strands. The present membrane is advantageously tough and useful for separating the anode and cathode compartments of an electrolytic cell of a chloralkali, especially sodium chloride, and the membrane reduces power consumption. The present invention is also concerned with a novel process for efficiently producing an advantageous membrane in which a reinforcing plain woven fabric comprised of warp and weft strands being fixed to each other at their crossover points and having an openness of at least 55 % is encapsulated in a fluorinated polymer having ion exchange precursor groups.

### Discussion Of Related Art

It is well known in the art that an ion exchange membrane of a fluorinated polymer having carboxylate and/or sulfonate groups can be advantageously employed to separate the anode and cathode compartments of an electrolytic cell of an alkali metal chloride, especially sodium chloride. Naturally, the ion exchange membrane for use in this application must exhibit low power consumption and must have high mechanical strength such that the membrane is not damaged during installation into a cell and during electrolytic operation. However, generally, the tear strength of a fluorinated polymer film is low, so that the film per se cannot be used in electrolytic operation for a prolonged period of time. Accordingly, a countermeasure has been taken, in which a reinforcing material such as a reinforcing woven fabric is encapsulated in a fluorinated polymer film to thereby improve the tear strength of the film. This countermeasure does, however, often encounter various problems. Of the problems, the most critical one is the current shielding which is attributed to the ion impermeability that is inherent in the reinforcing woven fabric.

In industry, it is necessary to minimize the increase in power consumption due to the above-mentioned current shielding. The measure first thought of to attain this object was to render the texture of the fabric coarse, thereby increasing the openness of the fabric. The term "openness" as used herein means a ratio, expressed as a percentage, of the total area of the window portions defined by the crossed warp and waft strands of the reinforcing woven fabric to the overall area of the fabric.

Generally, the reinforcing effect of a woven fabric to be employed for reinforcing an ion exchange membrane can be increased by increasing the thread count of the fabric and the diameter of each strand of the fabric. However, these increase the thickness of the fabric and decrease the openness of the fabric, thereby causing the final ion exchange membrane to have a decreased effective conductive area and hence an increased electrical resistance. Therefore, generally, a woven fabric composed of strands having a relatively small diameter which fabric has a low thread count so as to have a large openness is selected as a reinforcing fabric for an ion exchange membrane.

However, a woven fabric which is composed of strands which are too small in diameter and has too low of a thread count is poor in its capability of retaining the structure of the fabric (hereinafter often referred to as "structure-retaining capability"), and texture slippage and rupture are likely to occur with respect to the fabric. Hence, handling of the woven fabric as mentioned above is difficult and consequently it is not suited for use in industry. This is especially true when a woven fabric prepared from a fluorinated polymer strand having a low frictional coefficient is used as a chemical resistant, reinforcing fabric. To cope with this problem, it has been proposed to use a leno woven fabric.

Further, as mentioned above, when a thin woven fabric made of reinforcing strands each having a small diameter is used to minimize the current shielding attributed to the ion impermeability of the fabric, the above-mentioned texture slippage and rupture of the fabric become critical.

Various proposals have been made for producing a woven fabric for use in an ion exchange membrane from a reinforcing strand having as small a diameter as possible so that the fabric has as large an openness as possible. For example, in Japanese Patent Application Laid-Open Specification NO. 59-172524/1984 and No. 61-7338/1986, it has been proposed to use a leno woven fabric for which the diameter of reinforcing strands, the thread count and the cross-sectional morphology of the strands have been optimized. Although this leno woven fabric provides a reinforcing fabric for use in an ion exchange membrane which can have a relatively large openness with reduced texture slippage problems, the leno weave is accompanied by triple crossing of warp and weft strands at their crossover points as mentioned at the upper portion of page 2 of Japanese Patent Application Laid-Open Specification No. 61-7338/1986, thereby causing the ultimate membrane to have a disadvantageously large thickness at the crossover points. This increases the concavoconvex degree of the membrane surface. As a result, gas bubbles are trapped in the membrane during use in electrolytic operation, thereby causing the electrical resistance of the cell to increase. Further, the above-mentioned increase in concavoconvex degree causes the current density to be non-uniform over the membrane.

U.S. Patent No. 4,437,951 discloses a reinforced ion exchange membrane which is prepared by the use of a reinforcing woven fabric comprising reinforcing strands of a perfluorocarbon polymer and sacrificial strands of a hydrocarbon polymer. In the invention of this patent, the reinforcing woven fabric is first encapsulated in a fluorinated polymer, thereby forming a membrane. Then, the membrane is subjected to treatment by which the sacrificial strands are dissolved and separated. As a result, an ion exchange membrane reinforced with a woven fabric which is free from texture slippage and has a high value of openness is obtained according to the invention of U.S. Patent No. 4,437,951. However, the ion exchange membrane of this patent has a drawback in that the membrane has channels formed by removal of the sacrificial strands from the membrane at the sites originally occupied by the sacrificial strands, which channels cause the membrane to have a poor flexural strength. Hence, the ion exchange membrane of U.S. Patent No. 4,437,951 is not desirable with respect to mechanical strength from the industrial point of view.

As described above, the proposals heretofore made have inherent problems. That is, the proposal for using a leno woven fabric, which is appreciated from the viewpoints of resolving texture slippage and ensuring a desirable openness, has the inherent problem that the thickness of the final membrane is disadvantageously large at the crossover points of warp and weft strands because triple crossing of the strands occurs at the points. On the other hand, the proposal for preparing an ion exchange membrane by the use of a woven fabric comprising reinforcing strands and sacrificial strands, the sacrificial strands being removed after the encapsulation of the woven fabric in a fluorinated polymer, is appreciated from the viewpoint of ensuring a desirable openness, but has the inherent problem that the membrane has channels formed by removal of the sacrificial strands, which channels cause the membrane to have a poor flexural strength.

### Summary Of The Invention

The present inventors have made extensive and intensive studies with a view toward developing an ion exchange membrane free from the aforementioned drawbacks of the prior art, i.e. toward developing an ion exchange membrane reinforced with a woven fabric having a desirable openness, which membrane has a desirable thickness uniformity and is free of channels formed by removal of a sacrificial strand. As a result, it has unexpectedly been found that the desired ion exchange membrane as mentioned above can be obtained by encapsulating in a film of a fluorinated polymer a reinforcing plain woven fabric comprising warp and weft strands of a fluorinated polymer, preferably a perfluorinated polymer, and having a large value of openness, in which fabric the warp and weft strands are fixed to each other at crossover points thereof.

That is, a reinforcing strand of a fluorinated polymer is woven together with a sacrificial strand to obtain a plain woven fabric, and at least crossover portions of the reinforcing strands are fixed by heated rolls, binder treatment, etc., followed by removal of the sacrificial strands by dissolution, decomposition or other treatment, thereby providing a sacrificial strand-free woven fabric. This sacrificial strand-free woven fabric has a desirable openness, and nevertheless, unexpectedly, is free from texture slippage and has a structure-retaining capability sufficient to resist the external force applied during the manufacturing steps of an ion exchange membrane. By encapsulating the sacrificial strand-free woven fabric in a film of a fluorinated polymer, an ion exchange membrane which is tough and accomplishes power consumption saving can be obtained. The present invention has bene accomplished on the basis of this novel finding.

The foregoing and other features and advantages of the present invention will be apparent from the following detailed description and appended claims.

### Detailed Description of the Invention

In one aspect of the present invention, there is provided a reinforced ion exchange membrane comprising at least two layers of a fluorinated polymer having pendant sulfonate groups, carboxylate groups or a mixture thereof and a reinforcing plain woven fabric comprising warp and weft reinforcing strands of a fluorinated copolymer, said warp and weft reinforcing strands crossing each other to form window portions defined by the crossed warp and weft reinforcing strands, said reinforcing plain woven fabric being encapsulated in at least one of said layers,
said reinforcing plain woven fabric being obtained by providing a plain woven fabric comprising reinforcing strands and sacrificial strands, the ratio of the number of sacrificial strands to that of reinforcing strands being an even number, fixing said reinforcing strands of the plain woven fabric at their crossover points by heat press treatment or binder treatment and dissolving or decomposing said sacrificial stands,
said reinforcing plain woven fabric having an openness of from 55 to 90%, said openness being defined as a ratio of the total area of the window portions to the overall area of the reinforcing plain woven fabric,
said membrane being free of sacrificial strands between adjacent warp reinforcing strands and between adjacent weft reinforcing strands of the reinforcing plain woven fabric and free of channels formed by removal of said sacrificial strands.

The terminology "channels formed by removal of sacrificial strands" used herein means the channels or voids formed during the sacrificial strand removal step, or during the hydrolysis step for converting ion exchange precursor groups to ion exchange groups in a precursor membrane prepared by encapsulating a reinforcing woven fabric containing a sacrificial strand in a fluorinated polymer film, or during electrolysis using the membrane reinforced by a woven fabric containing a sacrificial strand.

Such channels or voids include:
(1) channels or voids formed by complete dissolution or elimination of a sacrificial strand during the above-mentioned sacrificial strand removal step or hydrolysis step;
(2) channels or voids formed by partial dissolution or elimination of a sacrificial strand during the above-mentioned sacrificial strand removal step or hydrolysis step; and
(3) channels or voids formed by partial dissolution of a sacrificial strand during the sacrificial strand removal step or hydrolysis step and the subsequent dissolution of the remaining portion of the strand during electrolysis, or formed during electrolysis by dissolution of a sacrificial strand which has been left intact during the sacrificial strand removal step and hydrolysis step.

The channels or voids mentioned in (1), (2) and (3) above include both those which have openings at the surface of the membrane and those which are entirely enclosed in the membrane.

The openness of the plain woven fabric in the membrane according to the present invention is at least 55 %. As the openness becomes larger, the electrical resistance of the ion exchange membrane becomes lower. However, when the openness is too large, the structure-retaining capability of the plain woven fabric, i.e., the effect of the fabric for reinforcing the membrane, is poor. Accordingly, the openness is preferably selected so as to be as large as possible within the range in which the fabric has a sufficient reinforcing effect. In general, the upper limit of the openness is 90 %.

The reinforcing fabric to be used in the ion exchange membrane of the present invention may be manufactured by weaving a reinforcing strand of a fluorinated polymer, preferably a perfluorinated polymer, together with a sacrificial strand to form a plain woven fabric, fixing the reinforcing warp and weft strands to each other at their crossover points by either treating the fabric with a binder or processing the fabric with a heated roll, and removing the sacrificial strand by dissolution, decomposition or the like, as described later.

The reinforcing plain woven fabric thus manufactured is characterized in that it is free of sacrificial strands and has such a high structure-retaining capability that texture slippage and fabric rupture do not occur even at a high value of openness. The fabric is also characterized in that the thickness of the fabric at the points where the warp and weft strands cross each other is small, as is the case with all plain woven fabrics. For these reasons, the above fabric is excellent as a reinforcing fabric for use in ion exchange membranes.

The ion exchange membrane of the present invention may be produced by encapsulating the above-described reinforcing plain woven fabric in at least one of the fluorinated polymer layers of a film comprising at least two layers of a fluorinated polymer having pendant sulfonate precursor groups, carboxylate precursor groups or a mixture thereof in a melt-fabricatable form, followed by conversion of the precursor groups to ion exchange groups.

Therefore, in another aspect of the present invention there is provided a process for producing a reinforced ion exchange membrane comprising the steps of:
(1) providing a reinforcing plain woven fabric comprising warp and weft reinforcing strands of a fluorinated polymer, said warp and weft reinforcing strands each having a size of from 50 to 400 gram/9000m (denier) and crossing each other to form window portions defined by the crossed warp and weft reinforcing strands,
   said warp and weft reinforcing strands being fixed to each other at crossover points thereof,
   said reinforcing plain woven fabric having an openness of from 55 to 90%, said openness being defined as a ratio of the total area of the window portions to the overall area of the reinforcing plain woven fabric
   said reinforcing plain woven fabric being free of sacrificial strands,
   said reinforcing plain woven fabric being obtained by providing a plain woven fabric comprising reinforcing strands and sacrificial strands, the ratio of the number of sacrificial strands to that of reinforcing strands being an even number, fixing said reinforcing strands of the plain woven fabric at their crossover points by heat press treatment or binder treatment and dissolving or decomposing said sacrificial strands;
(2) encapsulating said reinforcing plain woven fabric in at least one of the fluorinated polymer layers of a film comprising at least two layers of a fluorinated polymer having pendant sulfonate precursor groups, carboxylate precursor groups or a mixture thereof in a melt-fabricable form; and
(3) converting said sulfonate precursor groups, said carboxylate precursor groups or said mixture thereof to sulfonate groups, carboxylate groups or a mixture thereof, respectively.

The method of encapsulating the reinforcing fabric in at least one of the layers of a fluorinated polymer is not particularly limited, and any of the customary encapsulation methods which have been developed for producing a reinforced ion exchange membrane may be employed.

The ultimate ion exchange membrane of the present invention is free of sacrificial strands between adjacent warp strands and between adjacent weft strands of the fabric and free of channels formed by removal of the sacrificial strands. Further, with respect to the present ion exchange membrane, the plain woven fabric has a high value of openness, and the thickness of the fluorinated polymer having ion exchange groups is large at the points where the warp and weft strands cross each other, as compared to that of a conventional membrane reinforced with a leno woven fabric. Due to these features, the ion exchange membrane of the present invention has excellent flexural strength, and an electrolytic cell comprising the membrane operates with low power consumption. The present ion exchange membrane is especially suited for use in an electrolytic cell of a chloralkali, particularly sodium chloride. The present ion exchange membrane can be used for a prolonged period of time without breaking even in an electrolytic cell wherein slight vibrations due to evolved gases, such as hydrogen gas and chlorine gas, and due to solution flow in the anode and cathode compartments cannot be avoided at a high current density.

In the present invention, the terminology "fluorinated polymer" means a polymer comprising a main chain of a fluorinated hydrocarbon and side chains of cation exchange groups in a melt-fabricatable form. A general process for producing the fluorinated polymer will now be described, but the description given hereinbelow is never intended to limit the scope of the present invention.

The fluorinated polymer may be produced by copolymerizing at least one monomer selected from group I defined below and at least one monomer selected from groups II and III also defined below.

Monomers of group I include fluorinated vinyl compounds such as vinyl fluoride, hexafluoropropylene, vinylidene fluoride, trifluoroethylene, chlorotrifluoroethylene, perfluoro(alkyl vinyl ether) and tetrafluoroethylene. When the ultimate membrane is used as a membrane for chloralkali electrolysis, the monomers of group I are preferably chosen from fluorinated monomers containing no hydrogen atom, such as tetrafluoroethylene, perfluoro(alkyl vinyl ether) and hexafluoropropylene.

Monomers of group II include vinyl compounds having functional groups capable of being converted to carboxylate type ion exchange groups. These functional groups are often referred to as "carboxylate precursor groups". Generally, monomers of group II are represented by the formula: 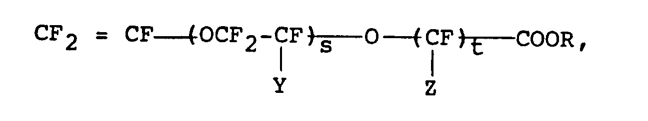
wherein s is O, 1 or 2; t is an integer of from 1 to 12; Y and Z each independently represent F or CF₃; and R represents a lower alkyl.
Of these, preferable monomers include compounds represented by the formula: 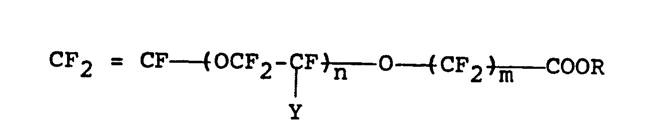
wherein n is 0, 1, or 2; m is 1, 2, 3 or 4; Y represents F or CF₃; and R represents CH₃, C₂H₅ or C₃H₇.

Particularly, when the ultimate membrane is used as a membrane for chloralkali electrolysis, the monomer of group II is preferably a perfluorinated compound. However, it is not necessary that the group R (lower alkyl) be perfluorinated because it is eliminated when the functional groups are converted to ion exchange groups. Examples of such preferable perfluorinated compounds include
CF₂ = CFOCF₂CF(CF₃)OCF₂COOCH₃,
CF₂ = CFOCF₂CF(CF₃)O(CF₂)₂COOCH₃,
CF₂ = CF[OCF₂CF(CF₃)]₂O(CF₂)₂COOCH₃,
CF₂ = CFOCF₂CF(CF₃)O(CF₂)₃COOCH₃,
CF₂ = CFO(CF₂)₂COOCH₃, and
CF₂ = CFO (CF₂)₃COOCH₃.

Monomers of group III include vinyl compounds having functional groups capable of being converted to sulfonate type ion exchange groups. These functional groups are often referred to as "sulfonate precursor groups". Such vinyl compounds may be represented by the formula:

CF₂ = CF-T_{K}CF₂SO₂F

wherein T is a bifunctional fluorinated group having 1 to 8 carbon atoms and K is 0 or 1.
The above-mentioned bifunctional fluorinated group (T) may have a chlorine atom as a substituent. In this group, a hydrogen atom or hydrogen atoms may remain intact. However, when the ultimate membrane is used as a membrane for chloralkali electrolysis, it is preferred that all of the hydrogen atoms be replaced with fluorine atoms or with fluorine atoms together with chlorine atoms. The most desirable polymer is a perfluorinated polymer containing no carbon-hydrogen bond or carbon-chlorine bond, which polymer exhibits excellent resistance to severe conditions.

Further, the above-mentioned bifunctional fluorinated group (T) may be branched or unbranched (i.e., straight chain), and may have one or more ether bonds. It is preferred that the vinyl groups of the monomer be bonded with the above-mentioned group T through an ether bond. For example, monomers represented by the formula:

CF₂ = CFOTCF₂-SO₂F

are preferably used.

Examples of the above-mentioned monomers containing sulfonyl fluoride groups include
CF₂ = CFOCF₂CF₂SO₂F,
CF₂ = CFOCF₂CF(CF₃)-OCF₂CF₂SO₂F,
CF₂ = CFOCF₂CF(CF₃)-OCF₂CF₂CF₂SO₂F,
CF₂ = CFO[CF₂CF(CF₃)O]₂-CF₂CF₂SO₂F,
CF₂ = CF(CF₂)₂SO₂F, and
CF₂ = CFOCF₂CF(CF₂OCF₃)-OCF₂CF₂SO₂F.
Of these, particularly preferable are
CF₂ = CFOCF₂CF(CF₃)-OCF₂CF₂CF₂SO₂F and
CF₂ = CFOCF₂CF(CF₃)-OCF₂CF₂SO₂F.

The copolymer to be used in the present invention may be produced from the above-mentioned monomers in accordance with the conventional practice of homopolymerization or copolymerization of a fluorinated ethylene, especially tetrafluoroethylene.

For example, the copolymer to be used in the present invention may be produced, as disclosed in U.S. Patent No. 3041317, by a non-aqueous method in which polymerization is performed in the presence of a radical initiator, such as a perfluorocarbon peroxide and an azo compound, at a temperature of 0 to 200 °C under a pressure of 1 to 200 atm, using as a solvent an inert liquid such as a perfluorohydrocarbon and a chlorofluorocarbon.

In conducting copolymerization, the types and proportions of the employed monomers of groups I, II and III are chosen according to the types and amounts of functional groups to be contained in the final fluorinated polymer.

For example, when a polymer containing only carboxylic ester functional groups is desired, at least one monomer selected from the monomers of group I is used together with at least one monomer selected from the monomers of group II. When a polymer containing both of carboxylic ester groups and sulfonyl fluoride groups is desired, at least one monomer selected from the monomers of group I is used together with at least one monomer selected from the monomers of group II and at least one monomer selected from the monomers of group III. Further, a copolymer of monomers from groups I and II and a copolymer of monomers from groups I and III may be blended together to obtain a copolymer to be used in the present invention.

The proportions of the monomers employed are selected according to the required amount of functional groups per unit of the final polymer. The amount of functional groups can be increased by increasing the amounts of monomers of groups II and III. The proportions of monomers from groups II and III are generally selected in such a manner that the ion exchange capacity of the final polymer becomes 0.5 to 2.0 meq./g (milliequivalent/g), preferably 0.7 to 1.5 meq./g, after conversion of the total amount of functional groups to ion exchange groups.

The ion exchange membrane of the present invention may be produced using at least two films obtained by molding a fluorinated polymer having functional groups in melt-fabricatable form which are convertible to cation exchange groups.

Molding of the polymer into a film to be used in the present invention can be performed in accordance with conventional practices. The thickness of the film of the polymer is generally in the range of from about 7 µm to about 150 µm.

In the ion exchange membrane of the present invention, the types of ion exchange groups, ion exchange capacity, film thickness, number of films and lamination order of films may be varied according to the usage, application conditions, etc.

The reinforcing woven fabric to be used in the present invention may be manufactured by (1) weaving a reinforcing strand made of a monofilament or multifilament of a fluorinated polymer together with a sacrificial strand to obtain a plain woven fabric comprising reinforcing warp and weft strands and, disposed between adjacent reinforcing warp strands and between adjacent weft strands, sacrificial warp and weft strands, respectively, (2) subjecting the plain woven fabric to heated roll or binder treatment so as to cause the reinforcing warp and weft strands to be fixed to each other at their crossover points so that the structure of the fabric can be maintained enduring handling after removal of the sacrificial strands, and (3) removing the sacrificial strands. The reinforcing strand may be a monofilament or multifilament prepared from a polymer having a hydrocarbon chain wherein all of the hydrogen atoms are substituted with fluorine atoms or with fluorine and chlorine atoms. The reinforcing strand may have a cross section of circular, elliptical, rectangular or other various configurations. When the ultimate membrane is used in chloralkali electrolysis, it is preferred that the reinforcing strand be prepared from a homopolymer or copolymer of at least one member selected from the group consisting of tetrafluoroethylene, hexafluoropropylene, perfluoro(alkyl vinyl ether) wherein the alkyl moiety has 1 to 10 carbon atoms, and chlorotrifluoroethylene. A reinforcing strand prepared from a perfluorinated polymer is more preferred from the viewpoint of chemical resistance, and most preferred is a reinforcing strand prepared from polytetrafluoroethylene (hereinafter often referred to simply as PTFE). The reinforcing strand may be a monofilament or multifilament having a size of from 50 to 400 g/9000m (denier), preferably from 50 to 200 g/9000m (denier). The reinforcing strand may be a stretched porous PTFE strand or a PTFE strand having a compressed cross section which is described in British Patent No. 2,091,166 and U.S. Patent No. 4,437,951.

The sacrificial strand is woven with the reinforcing strand and, after fixing of the reinforcing warp and weft strands at their crossover points, the sacrificial strands are removed by dissolution or decomposition using, for example, an acid, an alkali, etc. as described later. Therefore, it is required that the properties of the sacrificial strands be such that they can be easily removed without adversely affecting the reinforcing strands. Also, it is required that the sacrificial strands have such physical properties that they are not adversely affected by the above-mentioned reinforcing strands-fixing treatment with a heated roll or a binder.

The sacrificial strand may be a conventional monofilament selected from the group consisting of synthetic filaments such as a polyester filament, a polyamide filament, an acrylic filament or a polyvinyl alcohol filament; regenerated filaments such as a rayon filament or a cupra filament; a metallic filament; and a carbon filament. The sacrificial strand may also be a multifilament prepared from the above-mentioned filaments. The sacrificial strand may have a cross section of circular, elliptical, rectangular or other various configurations.

The diameter of the sacrificial strand in the direction of the fabric thickness is preferably as small as 15 µm to 40 µm. This is because if a sacrificial strand having larger diameter is employed, especially when the plain woven fabric having such a sacrificial strand is subjected to pressing with a heated roll, the reinforcing strand is excessively compressed by the deformation of the adjacent sacrificial strand. This causes the openness of the fabric to be decreased. In this respect, as a sacrificial strand, a tape yarn prepared by splitting a polymer film can be advantageously employed.

The size of the sacrificial strand to be used in the present invention is generally in the range of 20 to 200 g/9000m (denier), preferably 30 to 50 g/9000m (denier).

In producing a plain woven fabric, it is necessary that the ratio of the number of sacrificial strands to that of reinforcing strands be an even number. When the ratio of the number of sacrificial strands to that of reinforcing strands is an odd number, removal of the sacrificial strands brings about a strand arrangement in which either the reinforcing warp strands are only disposed on the reinforcing weft strands or the reinforcing weft strands are only disposed on the reinforcing warp strands. That is, in this case, a plain woven fabric cannot be obtained. The sacrificial strands are generally present in an even number between 2 to 10, preferably 2 or 4, relative to the reinforcing strands.

The thread count of the reinforcing strands is generally in the range of from 2 to 20 per cm (5 to 50 per inch), preferably in the range of from 4 to 14 per cm (10 to 35 per inch).

With respect to a plain woven fabric comprising reinforcing strands and sacrificial strands, fixing of the reinforcing warp and weft strands at their crossover points may be performed, for example, by either of the following two methods. In one method, the warp and weft strands are fixed to each other by heat press treatment. In the other method, the fixing is performed by means of a binder.

In the heat press method, a plain woven fabric comprising reinforcing and sacrificial strands is subjected to heat press by means of, e.g., a heated roll. In the heat press treatment, surface pressure is applied to the crossover points of reinforcing warp and weft strands at which the thickness of the plain woven fabric is the largest so as to cause the fabric thickness to decrease, thereby enabling the reinforcing warp and weft strands to gather in upon each other at the crossover points. For the heat press treatment, devices such as a heated roll and a heating plate are generally employed. However, the type of the devices is not particularity limited. The temperature at which the heat press treatment is performed is generally in the range of from 30° to 300°C.

The pressure to be applied in the heat press treatment is varied depending on the fabric thickness decrease to be attained by the press treatment at the crossover points. The larger the thickness decrease at the crossover points, the greater the fixing strength of reinforcing warp and weft strands at the points. However, when the thickness decrease at the crossover points is too large, the reinforcing strands are excessively compressed and the openness of the fabric is disadvantageously decreased. The pressure necessary for performing the heat press treatment is varied depending on the type of the reinforcing strand, the thread count of reinforcing strand and the temperature for the heat treatment. However, it is generally preferred that the pressure be selected so as to cause the decrease in the thickness of a plain woven fabric at the crossover points to be in the range of from 25 to 100 µm.

On the other hand, in the method in which a binder is employed for fixing the reinforcing warp and weft stands at their crossover points, a synthetic resin in the from of a solution or an emulsion is generally used as the binder. The synthetic resin is required to have properties such that it can sufficiently endure the treatment for removal of the sacrificial strands and the heat press treatment which is optionally conducted to regulate the thickness of the fabric.

Examples of such synthetic resins include a synthetic rubber, a polyacrylic ester and a vinyl acetate copolymer which are conventionally employed for producing a non-woven fabric. Examples of such synthetic resins further include a homopolymer or a copolymer of a vinyl compound such as tetrafluoroethylene, hexafluoropropylene, vinylidene fluoride and a perfluoroalkyl vinyl ether, or a vinyl compound having functional groups which can be converted into ion exchange groups, such as CF₂=CFOCF₂CF(CF₃)OCF₂CF₂SO₂F and CF₂=CFOCF₂CF(CF₃)O(CF₂)₂COOCH₃.

For performing the fixing of the reinforcing warp and weft strands at their crossover points by means of a binder, there may be employed a customary technique such as (1) an "immersion technique" in which a plain woven fabric is immersed in a binder liquid, followed by removal of any surplus part of the liquid from the fabric, (2) a "roller technique" in which a roller dipped in a binder liquid is used to transfer the liquid to a plain woven fabric, and (3) a "spray technique" in which a binder liquid is sprayed onto a plain woven fabric from a nozzle. Particularly when a binder in an emulsion form is used for fixing of the reinforcing warp and weft strands at their crossover points, it is necessary to melt the binder polymer using electrical heating, infrared heating, a heated roller, etc. In this case, the temperature for melting the binder polymer is selected to be in a range such that the physical properties of the reinforcing strands are not adversely affected. The temperature is generally in the range of from 60° to 250 °C, preferably 100° to 200 °C. The amount of binder polymer to be applied for the fixing of reinforcing warp and weft strands is not critical as long as desired fixing strength and openness are attained.

Removal of the sacrificial strands from a plain woven fabric comprising reinforcing and sacrificial strands and having the reinforcing warp and weft strands fixed to each other at their crossover points, is performed by dissolving or decomposing the sacrificial strands by means of, e.g., an acid, an alkali, an oxidizing agent or an organic solvent. Suitable conditions for such dissolution or decomposition are selected according to the type of the sacrificial strands. For example, in the case of sacrificial strands made of polyester, they can be removed by an alkali solution without adversely affecting the reinforcing strands. In the case of sacrificial strands made of a regenerated cellulose or nylon, removal can be suitably performed using concentrated sulfuric acid. In the case of sacrificial strands made of a water soluble vinylon, removal can be suitably performed using hot water.

In the method in which a binder is employed for fixing the reinforcing warp and weft strands at their crossover points, heat press treatment is optionally conducted for decreasing the thickness of a plain woven fabric at their crossover points. This treatment may be conducted before or after removing the sacrificial strands. However, it is generally preferred that the heat press treatment be performed after removing the sacrificial strands. This is because if the heat press treatment is conducted before removing the sacrificial strands, the reinforcing strands are likely to be compressed by the deformation of the adjacent sacrificial strands, thereby causing the openness of the fabric to be disadvantageously decreased.

The reinforcing plain woven fabric produced by the methods described above has excellent resistance to heat and chemicals, which is attributed to the property of the fluorinated polymer strand. Also, the plain woven fabric has a large value of openness, excellent structure-retaining capability and decreased thickness at the crossover points, as compared to those of conventional plain woven fabrics. Moreover, this fabric contains no sacrificial strands. This fabric is especially suited for use as a reinforcing fabric for an ion exchange membrane to be used for producing alkali.

The ion exchange membrane of the present invention can be prepared by encapsulating the above-mentioned reinforcing fabric into a fluorinated polymer film. The method for this encapsulation is not particularly limited and a customary method as described below can be employed.

For example, a method disclosed in U.S. Patent No. 3,770,567 may be employed. In this method, only one surface of a fluorinated polymer film having pendant sulfonyl fluoride groups is subjected to hydrolysis, thereby converting the sulfonyl fluoride groups into alkali metal sulfonate groups. The other surface of the polymer film is brought into contact with a reinforcing fabric, and the resultant assembly is heated at 200° to 300 °C for a period of time sufficient to attain complete encapsulation of the reinforcing fabric in the fluorinated polymer, while keeping the side of the fluorinated polymer film in contact with the reinforcing fabric under negative pressure. Further, another method may be employed as disclosed in U.S. Patent No. 4,324,606. In this method, at least two films of a fluorinated polymer having pendant sulfonyl and/or carboxyl groups in a melt-fabricatable form and a woven reinforcing fabric are brought into face-to-face contact such that proximate surfaces of two of the films contact opposite planar surfaces of the fabric, and air is removed from between the films at the two opposite edge portions thereof, followed by heat application to the two outermost opposite planar film surfaces.

The encapsulation of the reinforcing plain woven fabric as desired in the present invention may be performed by any of the above customary methods. However, the desired encapsulation can be most properly attained by a method disclosed in Japanese Patent Application No. 62-151236 filed on June 19, 1987 (corresponding to pending U.S. Patent Application Serial No. 207,965). This method will now be described in detail. In this method, use is made of an apparatus provided with a mount portion on which a sheet-form material is to be mounted, which mount portion has a vast plurality of tiny through-paths through which a negative pressure or suction force can be applied by means of a vacuum device to the surface of the sheet-form material so that the material may be pressed against the mount portion and also provided with a heating device capable of heating the sheet-form material. This apparatus is hereinafter referred to as "a lamination apparatus".

The shape of the mount portion of the apparatus is not particularly limited and may be planar, drum shaped or the like. Hereinbelow, however, an explanation is given on the process for encapsulating the fabric using an apparatus provided with a planar mount portion.

In the method of Japanese Patent Application No. 62-151236 (corresponding to U.S. Patent Application Serial No. 207,965), the encapsulation of the reinforcing plain woven fabric is performed as follows. First, a first and a second sheet material are provided. The first sheet material comprises a support sheet and, laminated thereto, at least one film layer of a melt-fabricatable fluorinated polymer having pendant sulfonyl and/or carboxyl groups in a melt-fabricatable form. The second sheet material comprises a film of a melt-fabricatable fluorinated polymer having pendant sulfonyl and/or carboxyl groups in a melt-fabricatable form. Second, a woven reinforcing fabric comprising warp and weft strands is sandwiched between the first sheet material and the second sheet material in a manner such that the fabric contacts the polymer film layer of the first sheet material and contacts the polymer film of the second sheet material. Third, the resultant assembly of the first sheet material, the fabric and the second sheet material is heated while applying a negative pressure to one side of the second sheet material that is remote from the support sheet, thereby performing encapsulation of the fabric into the polymer film layer of the first sheet material, the polymer film of the second sheet material or the film of each of the first sheet material and the second sheet material.

Now, each of the steps of the above outlined method will be described.

First, a first sheet material is prepared by laminating at least one film of a melt-fabricatable fluorinated polymer to a support sheet.

The support sheet to be laminated to at least one fluorinated polymer film for obtaining a first sheet material may be made of any materials which would substantially not be deformed by the heat and pressure to be applied in the step for encapsulation of the fabric, and which exhibit a gas transmission rate of 3 to 200 mmHg, preferably 5 to 50 mmHg, as measured in accordance with Japanese Industrial Standard P-8117-80. It is preferred that the gas transmission rate be in the above range, from the viewpoints of facilitating the removal of air at the time of the application of a negative pressure and unification of melted polymer films at the time of encapsulation of the fabric. Representative examples of support sheets include a kraft paper, a free sheet, a coated paper and a metal foil. The support sheet as such may be used. Alternatively, the support sheet may have a coating layer attached thereto on the side of the polymer film to be laminated. The coating layer is constituted of a particulate heat resistant material, a release agent, and an adhesive. Examples of heat resistant materials include powders of a metal such as Al, Zn, Mg and Ni, powders of silicon oxide and an oxide of a metal such as Al, Mg, Ni, Sn, Ca, Ba, Cu and Ti, and powders of graphite, clay, sand and an organic polymer such as PTFE. Examples of adhesives include casein, animal glue, fish glue, gelatin, starch, carboxymethylcellulose, polyvinyl alcohol, polyethylene-co-vinyl acetate and acryl copolymers. Examples of release agents include a silicone resin, a paraffin, a wax and PTFE. As a preferred example of support sheets having the above-mentioned coating layers thereon, there may be mentioned a sheet described in Japanese Patent Application Laid-Open Specification No. 59-94698. The sheet may be obtained by coating a substrate paper such as a kraft paper with a mixture of a particulate heat resistant material such as iron oxide having a particle diameter of 0.1 to 100 µm, a release agent such as silicone emulsion, and an adhesive such as polyvinyl alcohol.

If the support sheet has a coating layer on one surface of the support sheet, the film is superimposed on the support sheet so that the film contacts the coating layer. Then, the resultant composite is disposed on the planar mount portion of the same apparatus as described above with respect to encapsulation of the fabric so that the support sheet contacts the surface of the mount portion. Then, the composite is heated while applying a negative pressure to the composite on the side of the support sheet through the through-paths of the mount portion so as to press the composite against the mount portion. As a result, the polymer is melted while the air between the support sheet and the film and, if any, between the films is completely removed, thereby preparing a laminated sheet, i.e., first sheet material composed of a support sheet having laminated thereto at least one film layer of a melt-fabricatable fluorinated polymer.

In producing a first sheet material, either a single film or a plurality of films of melt-fabricatable fluorinated polymers may be used. It is known to use an ion exchange membrane having a plurality of layers of fluorinated polymers as a membrane for chloralkali cells in order to reduce power consumption. For providing a first sheet material to be used in producing such an ion exchange membrane, a plurality of different types of films of melt-fabricatable fluorinated polymers may be laminated to a support sheet at once in the above-mentioned manner.

In the above-mentioned lamination step, the air between the film of a fluorinated polymer and the support sheet and between the films of fluorinated polymers escapes through the films and the support sheet.

By the use of a support sheet as mentioned above, the assembly to be fabricated for encapsulating a reinforcing woven fabric hardly deforms under the conditions in which the encapsulation of a reinforcing woven fabric is effected, thereby enabling production of an ion exchange membrane having a uniform thickness throughout the membrane, particularly at portions corresponding to the crossover points of the reinforcing warp and weft strands and window portions of the reinforcing fabric.

It is generally preferred that the bonding strength between the support sheet and the fluorinated polymer film layer be such that the support sheet is not detached from the film layer at the time of the encapsulation of a reinforcing fabric. However, even when the bonding strength is lower than that mentioned above, a significant effect of improving the flatness of the surface of the membrane can be attained due to the action of the support sheet which will not be heat-deformed in the step of the encapsulation of a reinforcing fabric. In the step of the encapsulation of a reinforcing fabric, the support sheet is pressed against the assembly of films of fluorinated polymers and a reinforcing fabric without being deformed and, therefore, causes the pressure applied to the crossover points to be higher than the pressure applied to the window portions, thereby forming a membrane having a uniform thickness throughout the membrane, particularly at portions corresponding to the crossover points and window portions of the reinforcing woven fabric.

Alternatively, another form of first sheet material may be employed. In this form of first sheet material, there is employed a support sheet having thereon a coating layer attached to the support sheet. The coating layer is formed by applying a mixture of a particulate heat resistant material, a release agent and an adhesive to one surface of the support sheet. Subsequently, the film of a melt-fabricatable fluorinated polymer is laminated to the support sheet in a manner such that the polymer film contacts the coating layer. The coating layer has a finely roughened surface of a concavo-convex structure and this concavo-convex structure on the surface of the coating layer is transcribed onto the surface of the polymer film layer of the ultimate ion exchange membrane to form thereon a fine concavo-convex structure. The use of an ion exchange membrane having such a fine roughened surface as a membrane in chloralkali cells is especially effective for reducing the power consumption. In the membrane having a fine roughened surface having a concavo-convex structure, it is preferred that the convex have a maximum height of at least 0.05 µm as determined substantially in accordance with Japanese Industrial Standard B0601 and that there be at least 20 concavo-convex portions per unit length of 1 mm having a roughness of at least 0.05 µm as determined substantially in accordance with U.S. SAE Standard J911. When electrolysis of an alkali chloride is performed using an electrolytic cell with a cation exchange membrane having the above-mentioned roughened surface being installed in such a manner that the roughened surface faces the cathode, the cell voltage is remarkably lowered without decrease in current efficiency.

Lamination of at least one film of a melt-fabricatable fluorinated polymer to a support sheet is performed under such conditions that the air between the adjacent layers of the assembly can be completely removed, and that the adjacent layers are completely melted. In general, the lamination is performed at a temperature of 220° to 300°C preferably 230° to 270°C under a pressure of 30 to 600 mmHg, preferably 60 to 300 mmHg at the surface of the support sheet for 0.5 to 10 min, preferably 1 to 5 min.

A second sheet material may be made of substantially the same fluorinated polymer film as used in the first sheet material. The method for the production of the fluorinated polymer film as described with respect to the polymer film of the first sheet material can apply to the second sheet material.

The woven reinforcing fabric is sandwiched between the first sheet material and the second sheet material made of a film of a melt-fabricatable fluorinated polymer in a manner such that the fabric contacts the polymer film layer of the first sheet material and contacts the polymer film of the second sheet material and is then encapsulated into the polymer film layer of the first sheet material and/or the polymer film of the second sheet material. The details are as follows.

For example, a porous release paper may preferably be disposed on the planar mount portion of the apparatus as mentioned above. Then, a second sheet material, a woven reinforcing fabric and a first sheet material are superimposed on the release paper in this order in such a manner that the polymer film layer of the first sheet material contacts the reinforcing fabric and, accordingly, the support sheet is at the top of the layers. If desired, as long as the thickness of the final membrane does not exceed about 500 µm, another film of a melt-fabricatable fluorinated polymer may be superimposed on the second sheet material prior to placement of the reinforcing fabric, and/or on the reinforcing fabric prior to placement of the first sheet material, in order to produce an ion exchange membrane which is improved with respect to current efficiency, cell voltage and chemical and mechanical durabilities. The resultant assembly is heated while applying a negative pressure to one side of the second sheet material that is remote from the support sheet. By this treatment, the fluorinated polymers are melted while the air between the adjacent layers of the assembly is removed, thereby performing encapsulation of the fabric into the polymer film layer of the first sheet material and/or the polymer film of the second sheet material.

The porous release paper which may preferably be used in the encapsulation step preferably has micropores having such a size that substantially no portion of a melted polymer can enter the micropores but the paper has a certain degree of gas transmission. Also, the release paper preferably has at least one surface thereof treated for example, with silicone so as to impart release properties to the surface thereof and to be resistant to the heat applied to the paper during the encapsulation step. A coated paper as described in Japanese Patent Application Laid-Open Specification No. 59-94698 may preferably be used as the porous release paper. The gas transmission rate of the porous release paper to be used in the encapsulation step is generally 5 to 200 mmHg, preferably 10 to 50 mmHg.

The encapsulation of the reinforcing fabric may be conducted at a temperature of 200° to 270°C, preferably 220° to 260°C under a negative pressure of 30 to 600 mmHg, preferably 60 to 300 mmHg for 0.5 to 10 min, preferably 1 to 5 min. The most appropriate temperature, pressure and period of time varies depending on the melt viscosities of the polymers used, the thicknesses of the polymer films and the type of the woven reinforcing fabric. That is, the temperature, pressure and period of time are appropriately controlled within the above-mentioned ranges so that the reinforcing fabric can be completely encapsulated in the fluorinated polymers.

In the present process, the support sheet is removed to obtain a precursor membrane comprising a polymer film layer derived from the first sheet material, a second sheet material laminated to the polymer film layer, and a reinforcing fabric encapsulated into the polymer film layer and/or the polymer film of the second sheet material. The precursor membrane is subjected to a conversion reaction, thereby converting the sulfonyl and/or carboxyl groups of the precursor membrane to sulfonate and/or carboxylate groups. The conversion reaction may be performed in accordance with conventional practices, for example, by hydrolyzing or otherwise chemically modifying the groups.

The ion exchange membrane of the present invention is reinforced by a plain woven fabric having a minimized thickness at the crossover points of the reinforcing warp and weft strands. Accordingly, the thickness of the fluorinated polymer layers having ion exchange groups is sufficiently large even at the crossover points of the reinforcing warp and weft strands. This improves the fluxural strength of the ion exchange membrane. Moreover, since the crossover portions of reinforcing warp and weft strands are fixed to each other, the encapsulation of the plain woven fabric can be performed without texture slippage even after removal of the sacrificial strands. Furthermore, since the fabric has a large value of openness and since the membrane is free of sacrificial strands between adjacent warp strands and between adjacent weft strands of the fabric and free of channels formed by removal of the sacrificial strands, the present ion exchange membrane exhibits excellent flexural strength and advantageously reduced electrical resistance and power consumption. Therefore, the present ion exchange membrane is advantageously used in alkali electrolysis.

Moreover, when a gas-and liquid-permeable non-electrode porous layer, such as those disclosed in U.S. Patent No. 4,552,631 and Japanese Patent Application Laid-Open Specification No. 56-112487/1981, is formed on at least one surface of the present ion exchange membrane, the performance of the membrane can be further improved. The non-electrode layer may be in the form of a thin hydrophilic coating and is ordinarily of an inert electroinactive or non-electrocatalytic substance. Such non-electrode layer should have a porosity of 10 to 99 %, preferably 30 to 70 %, and an average pore diameter of 0.01 to 1000 µm, preferably 0.1 to 100 µm, and a thickness generally in the range of 0.1 to 500 µm, preferably 1 to 25 µm. The non-electrode layer ordinarily comprises an inorganic component and a binder. The inorganic component may be tin oxide, titanium oxide, zirconium oxide, nickel oxide or an iron oxide such as Fe₂O₃ or Fe₃O₄.

### Detailed Description Of The Preferred Embodiments

The present invention will now be described in more detail with reference to the following Examples and Comparative Example, which should not be construed as limiting the scope of the present invention.

In the following Examples and Comparative Example, the following abbreviations are used.
PTFE: polytetrafluoroethylene
TFE/EVE: copolymer of tetrafluoroethylene and methyl perfluoro(4,7-dioxa-5-methyl-8-noneate)
TFE/PSEPVE: copolymer of tetrafluoroethylene and perfluoro(3,6-dioxa-4-methyl-7-octenesulfonyl fluoride)
In the following Examples and Comparative Example, the flexural strength is measured by applying a surface pressure of 0.15 Kg/cm² at intervals of 2 sec at about 25 °C to a sample prepared by cutting off a portion of an ion exchange membrane and doubling the portion in a manner such that the fold is in parallel with the reinforcing strand of the fabric incorporated in the membrane. Generally, the application of the surface pressure is repeated 10 times, and then observation is made to find whether or not a crack is present on the sample. When the surface portion on one side of the sample membrane contains carboxylate groups and that on the other does not contain the same, doubling of the sample is made so as to cause the carboxylate group-containing side to be inside.

In the following Examples and Comparative Example, EW means equivalent weight which is the weight (g) of a polymer per equivalent of an ion exchange group or a functional group convertible to an ion exchange group.

### Example 1

A reinforcing woven fabric is prepared as follows. A PTFE multifilament of 100 denier is used as a reinforcing strand and a polyester multifilament of 20 denier is used as a sacrificial strand. A plain woven fabric is prepared by weaving reinforcing and sacrificial strands so that the fabric has reinforcing warp and weft strands each at a thread count of 8 per cm (20 per inch), and that two sacrificial strands are present between adjacent reinforcing warp strands and between adjacent reinforcing weft strands. The plain woven fabric is pressed by rolls heated at 230 °C, thereby fixing the crossover portions of the reinforcing warp and weft strands. Thus, there is obtained a woven fabric having a thickness of 59 µm. The woven fabric is immersed in a 6N aqueous sodium hydroxide solution at 70 °C for 10 hours, thereby dissolving the sacrificial strands in the solution so that the sacrificial strands are completely removed. Thus, there is obtained a reinforcing woven fabric composed solely of the PTFE reinforcing strands and free of texture slippage. The fabric has a thickness of 55 µm and an openness of 69.1 %.

A support sheet having one surface thereof coated with a layer consisting of triiron tetroxide, polyvinyl alcohol and silicon, which sheet has a gas transmission rate of 26 mmHg as measured in accordance with Japanese Industrial Standard P-8117-80, is placed on a lamination apparatus as defined hereinbefore in a manner such that the uncoated surface of the support sheet contacts the upper surface of the lamination apparatus. Then, a 25 µm-thick film of a TFE/PSEPVE having an EW of 1260 and a 90 µm-thick film of a TFE/PSEPVE having an EW of 1080 are superimposed on the support sheet in this order. Subsequently, the support sheet and the two TFE/PSEPVE films are heated at 258 °C for 2 min while applying a negative pressure of 150 mmHg, thereby obtaining a first sheet material consisting of the support sheet and, laminated thereto, the two layers of TFE/PSEPVE having different EWs.

Separately, a porous release paper coated with silicon is placed on the lamination apparatus. Then, a 40 µm-thick film of a TFE/PSEPVE having an EW of 1080 as a second sheet material, the above-obtained woven reinforcing fabric and the above-obtained first sheet material are superimposed on the release paper in this order in a manner such that the fabric contacts the polymer film layer of the first sheet material that is remote from the support sheet and contacts the polymer film of the second sheet material. The resultant composite of the release paper, the second sheet material, the reinforcing fabric and the first sheet material are heated at 242 °C for 4 min, while applying a negative pressure of 150 mmHg to one side of the second sheet material that is remote from the support sheet, thereby performing encapsulation of the reinforcing fabric into the fluorinated polymer films. Then, the support sheet and the porous release paper are removed. Thus, there is obtained an ion exchange precursor membrane. The ion exchange precursor membrane has a thickness at crossover points (thickness from the surface of the reinforcing strand to the surface of the film having a higher EW) of at least 69 µm. The surface of the ion exchange precursor membrane having a higher EW is treated with a 3N potassium hydroxide at 75 °C, thereby converting the functional groups present in a surface portion of from the very surface to a depth of 20 µm into sulfonate ion exchange groups.

The thus treated surface portion is contacted with phosphorus pentachloride at 130 °C, thereby converting at least 98 % of the sulfonate groups to sulfonyl chloride groups. Thereafter, the surface portion is treated with hydriodic acid at 90 °C, thereby converting the sulfonyl chloride groups to carboxyl groups. Then, the membrane is further treated with an aqueous ethanol solution of potassium hydroxide at 70 °C, thereby converting all of the functional groups of the membrane to ion exchange groups. Thus, there is obtained an ion exchange membrane. With respect to the thus obtained membrane, the roughness of the surface having carboxylate groups is measured. The maximum height is 1.3 µm and there are 28 concavo-convex portions with a roughness of 0.05 µm or more per unit length of 1 mm.

The thus obtained ion exchange membrane is installed in a transparent electrolytic cell of an acrylic resin in a manner such that the surface of the membrane having carboxylate groups faces the cathode, and electrolysis of sodium chloride is performed in the cell with a current density of 40 A/cm² and at a temperature of 90 °C. An electrode obtained by coating a titanium substrate with ruthenium oxide is used as the anode in the cell, and an electrode made of an iron expanded metal is used as the cathode in the cell. The anode chamber is fed with a 3.5 N brine having a pH value of 2, and the cathode chamber is fed with 30 % caustic soda. As a result, the cell voltage is 3.33 V, and the current efficiency is 96.3 %.

The ion exchange membrane is subjected to flexural strength measurement, and it is found that there is no crack on the membrane even after application of surface pressure is repeated ten times.

### Example 2

A reinforcing woven fabric is prepared as follows. A PTFE multifilament of 100 g/9000m (denier) is used as a reinforcing strand, and a polyester multifilament of 20 g/9000m (denier) is used as a sacrificial strand. A plain woven fabric is prepared by weaving reinforcing and sacrificial strands so that the fabric has reinforcing warp and weft strands each at a thread count of 12 per cm (30 per inch), and that two sacrificial strands are present between adjacent reinforcing warp strands and between adjacent reinforcing weft strands. Sprayed onto the thus obtained fabric is a dispersion of a copolymer of tetrafluoroethylene, hexafluoropropylene and vinylidene fluoride, and heated at 200 °C for about 10 min. Consequently, the crossover portions of the reinforcing strands are bonded. The thus obtained fabric is immersed in a 6N aqueous caustic soda solution at 70 °C for 16 hours, thereby removing the sacrificial strands. The fabric is pressed by rolls heated at 230 °C so that the thickness of the fabric is 54 µm. The openness of the thus obtained reinforcing fabric is 59.5 %. An ion exchange membrane is produced in substantially the same manner as in Example 1 except that the above-mentioned reinforcing fabric is used. The performance of the thus obtained ion exchange membrane is evaluated in substantially the same manner as in Example 1. Even after application of surface pressure 10 times, no crack is observable on the membrane. The thickness of the fluorinated polymer having ion exchange groups at the crossover points is 81 µm. With respect to the electrolysis performance, the cell voltage is 3.38 V, and the current efficiency is 96.2 %.

### Example 3

A reinforcing woven fabric is prepared as follows. A PTFE multifilament of 200 g/9000m (denier) is used as a reinforcing strand, and a cupra multifilament of 30 g/9000m (denier) is used as a sacrificial strand. A plain woven fabric is prepared by weaving reinforcing and sacrificial strands so that the fabric has reinforcing warp and weft strands each at a thread count of 12 per cm (30 per inch), and that two sacrificial strands are present between adjacent reinforcing warp strands and between adjacent reinforcing weft strands. The plain woven fabric is pressed by rolls heated at 220 °C, thereby fixing the crossover portions of the reinforcing warp and weft strands. Thus, there is obtained a woven fabric having a thickness of 86 µm. The thus obtained fabric is immersed in 98 % sulfuric acid at room temperature for 10 hours, thereby completely removing the sacrificial strands. The openness of the thus obtained reinforcing fabric is 57.3 %. The fabric is free from texture slippage. An ion exchange membrane is produced in substantially the same manner as in Example 1 except that the above-mentioned reinforcing fabric is used. The performance of the thus obtained ion exchange membrane is evaluated in substantially the same manner as in Example 1. Even after application of surface pressure is repeated 10 times, no crack is observable on the membrane. The thickness the fluorinated polymer having ion exchange groups at the crossover points is 86 µm. With respect to the electrolysis performance, the cell voltage is 3.45 V, and the current efficiency is 96.7 %.

### Example 4

A reinforcing woven fabric is prepared as follows. A PTFE multifilament of 200 g/9000m (denier) is used as a reinforcing strand, and a water soluble polyvinyl alcohol multifilament of 30 g/9000m (denier) is used as a sacrificial strand. A plain woven fabric is prepared by weaving reinforcing and sacrificial strands so that the fabric has reinforcing warp and weft strands each at a thread count of 12 per cm (30 per inch), and that two sacrificial strands are present between adjacent reinforcing warp strands and between adjacent reinforcing weft strands. Sprayed onto the thus obtained fabric is a dispersion of a copolymer of tetrafluoroethylene, hexafluoropropylene and vinylidene fluoride, and heated at 200 °C for about 10 min. Consequently, the crossover portions of the reinforcing strands are bonded. The thus obtained fabric is immersed in hot water at 70 °C, thereby completely removing the sacrificial strands. The fabric is pressed by rolls heated at 200 °C so that the thickness of the fabric is 59 µm. The openness of the thus obtained reinforcing fabric is 61.1 %. The fabric is free from texture slippage. An ion exchange membrane is produced in substantially the same manner as in Example 1 except that the above-mentioned reinforcing fabric is used. The performance of the thus obtained ion exchange membrane is evaluated in substantially the same manner as in Example 1. Even after application of surface pressure is repeated 10 times, no crack is observable on the membrane. The thickness of the fluorinated polymer having ion exchange groups at the crossover points is 85 µm. With respect to the electrolysis performance, the cell voltage is 3.41 V, and the current efficiency is 96.5 %.

### Example 5

A porous release paper coated with silicon is placed on a lamination apparatus as defined hereinbefore in a manner such that the uncoated surface of the release paper contacts the upper surface of the lamination apparatus. Then, a 30 µm-thick film of a TFE/EVE having an EW of 1160 as a second sheet material and a 93 µm-thick film of a TFE/PSEPVE having an EW of 1080 are superimposed on the release paper in this order. The composite of the release paper and two polymer films is heated at 260 °C for 2 min while applying a negative pressure of 150 mmHg, thereby obtaining a laminated film comprising two layers of TFE/EVE and TFE/PSEPVE.

Then, separately, a porous release paper coated with silicon is placed on the lamination apparatus in a manner such that the uncoated surface of the release paper contacts the upper surface of the lamination apparatus. Then, a 40 µm-thick film of a TFE/PSEPVE having an EW of 1080, a plain woven fabric consisting of reinforcing strands prepared in Example 4 and the above-obtained lamination film are superimposed on the release paper in this order in a manner such that the TFE/EVE layer is upside. The resultant composite is heated at 245 °C for 4 min. while applying a negative pressure of 160 mmHg, thereby forming encapsulation of the reinforcing fabric by the fluorinated polymers. The thus obtained an ion exchange precursor membrane is treated with an aqueous potassium hydroxide solution of dimethyl sulfoxide, thereby converting the functional groups of the precursor membrane to ion exchange groups.

On the surface of the membrane having carboxylate groups, a porous layer comprising zirconium oxide and saponified TFE/PSEPVE copolymer is formed. The performance of the thus obtained ion exchange membrane is evaluated in substantially the same manner as in Example 1. Even after application of surface pressure is repeated 10 times, no crack is observable on the membrane. The thickness of the fluorinated polymer having ion exchange groups at the crossover points is 84 µm. With respect to the electrolysis performance, the cell voltage is 3.30 V, and the current efficiency is 96.2 %.

### Comparative Example 1

A reinforcing woven fabric is prepared as follows. A PTFE multifilament of 100 g/9000m (denier) is used as a reinforcing strand, and a cupra multifilament of 20 g/9000m (denier) is used as a sacrificial strand. A plain woven fabric is preparaed by weaving reinforcing and sacrificial strands so that the fabaric has reinforcing warp and weft strands each at a thread count of 8 per cm (20 per inch), and that two sacrificial strands are present between adjacent reinforcing warp strands and between adjacent reinforcing weft strands. The plain woven fabric is pressed by rolls heated at 200 °C. Thus, there is obtained a woven fabric having a thickness of 55 µm.

An ion exchange membrane is produced in substantially the same manner as in Example 1 except that the above-mentioned fabric is used. The thickness of the fluorinated polymer having ion exchange groups at the crossover points is 85 µm. The thus obtained ion exchange membrane has channels formed by removal of the sacrificial strands.

The ion exchange membrane is subjected to flexural strength measurement, and it is found that after application of surface pressure only one time, cracks are observed on the membrane. Cracks occur along channels formed by removal of the sacrificial strands.

## Claims

1. A reinforced ion exchange membrane comprising at least two layers of a fluorinated polymer having pendant sulfonate groups, carboxylate groups or a mixture thereof and a reinforcing plain woven fabric comprising warp and weft reinforcing strands of a fluorinated copolymer, said warp and weft reinforcing strands crossing each other to form window portions defined by the crossed warp and weft reinforcing strands, said reinforcing plain woven fabric being encapsulated in at least one of said layers,
said reinforcing plain woven fabric being obtained by providing a plain woven fabric comprising reinforcing strands and sacrificial strands, the ratio of the number of sacrificial strands to that of reinforcing strands being an even number, fixing said reinforcing strands of the plain woven fabric at their crossover points by heat press treatment or binder treatment and dissolving or decomposing said sacrificial strands,
said reinforcing plain woven fabric having an openness of from 55 to 90%, said openness being defined as a ratio of the total area of the window portions to the overall area of the reinforcing plain woven fabric,
said membrane being free of sacrificial strands between adjacent warp reinforcing strands and between adjacent weft reinforcing strands of the reinforcing plain woven fabric and free of channels formed by removal of said sacrificial strands.

2. The membrane according to Claim 1, wherein at least one surface of said membrane has a gas- and liquid- permeable porous non-electrode layer attached thereto.

3. The membrane according to Claim 1, wherein the surface of at least one layer of the membrane is roughened to have a concavo-convex structure such that there are at least 20 concavo-convex portions per unit length of 1 mm, each of said portions having a roughness of not smaller than 0.05 µm.

4. The membrane according to Claim 1 or 2, wherein said warp and weft strands each comprise a perfluorinated polymer and each have a size of from 50 to 400 gram/9000m (denier).

5. A process for producing a reinforced ion exchange membrane comprising the steps of:
(1) providing a reinforcing plain woven fabric comprising warp and weft reinforcing strands of a fluorinated polymer, said warp and weft reinforcing strands each having a size of from 50 to 400 gram/9000m (denier) and crossing each other to form window portions defined by the crossed warp and weft reinforcing strands,
said warp and weft reinforcing strands being fixed to each other at crossover points thereof,
said reinforcing plain woven fabric having an openness of from 55 to 90%, said openness being defined as a ratio of the total area of the window portions to the overall area of the reinforcing plain woven fabric,
said reinforcing plain woven fabric being free of sacrificial strands,
said reinforcing plain woven fabric being obtained by providing a plain woven fabric comprising reinforcing strands and sacrificial strands, the ratio of the number of sacrificial strands to that of reinforcing strands being an even number, fixing said reinforcing strands of the plain woven fabric at their crossover points by heat press treatment or binder treatment and dissolving or decomposing said sacrificial strands;
(2) encapsulating said reinforcing plain woven fabric in at least one of the fluorinated polymer layers of a film comprising at least two layers of a fluorinated polymer having pendant sulfonate precursor groups, carboxylate precursor groups or a mixture thereof in a melt-fabricable form; and
(3) converting said sulfonate precursor groups, said carboxylate precursor groups or said mixture thereof to sulfonate groups, carboxylate groups or a mixture thereof, respectively.

## Patentansprüche

1. Verstärkte Ionenaustauschermembran, die mindestens zwei Schichten eines fluorierten Polymeren mit seitenständigen Sulfonatgruppen, Carboxylatgruppen oder einem Gemisch dieser und ein Verstärkungsgewebe mit Leinenbindung enthält, welches in der Kette und im Schuß Verstärkungsstränge aus einem fluorierten Copolymeren enthält, wobei die Verstärkungsstränge in der Kette und im Schuß einander überkreuzen, so daß Fensterbereiche gebildet werden, die durch die überkreuzten Ketten- und Schuß-Verstärkungsstränge begrenzt sind, worin das Verstärkungsgewebe mit Leinenbindung in mindestens einer dieser Schichten eingekapselt ist,
wobei das Verstärkungsgewebe mit Leinenbindung erhalten wird, indem ein Webstoff mit Leinenbindung hergestellt wird, der Verstärkungsstränge und verlorene Stränge umfaßt, wobei das Verhältnis der Anzahl von verlorenen Strängen zu der der Verstärkungsstränge eine gerade Zahl ist, die Verstärkungsstränge des Webstoffes mit Leinenbindung an ihren Überkreuzungspunkten durch Heißpreßbehandlung oder Bindemittelbehandlung fixiert werden und die verlorenen Stränge herausgelöst oder zersetzt werden,
wobei das Verstärkungsgewebe mit Leinenbindung einen Offenheitsgrad von 55 bis 90 % aufweist, und der Offenheitsgrad definiert ist als das Verhältnis der Gesamtfläche der Fensterbereiche zu der Gesamtfläche des Verstärkungsgewebes mit Leinenbindung,
wobei die Membran frei ist von verlorenen Strängen zwischen benachbarten Ketten-Verstärkungssträngen und zwischen benachbarten Schuß-Verstärkungssträngen des Verstärkungsgewebes mit Leinenbindung und frei ist von Kanälen, die durch das Entfernen dieser verlorenen Stränge gebildet sind.

2. Membran nach Anspruch 1, wobei mindestens eine Oberfläche dieser Membran eine mit ihr verbundene gas- und flüssigkeitsdurchlässige poröse Nicht-Elektrodenschicht aufweist.

3. Membran nach Anspruch 1, wobei die Oberfläche von mindestens einer Schicht der Membran so aufgerauht ist, daß sie eine konkav-konvexe Struktur hat, in der mindestens 20 konkav-konvexe Bereiche pro Einheitslänge von 1 mm vorhanden sind, wobei jeder dieser Bereiche eine Rauhigkeit von nicht weniger als 0,05 µm hat.

4. Membran nach Anspruch 1 oder 2, wobei die Ketten- und Schußstränge jeweils ein perfluoriertes Polymeres enthalten und jeweils eine Abmessung von 50 bis 400 g/9000m (Denier) haben.

5. Verfahren zur Herstellung einer verstärkten Ionenaustauschermembran, das folgende Schritte umfaßt:
(1) Bereitstellen eines Webstoffes mit Leinenbindung, der Ketten- und Schuß-Verstärkungsstränge aus einem fluorierten Polymeren umfaßt, wobei die Ketten- und Schuß-Verstärkungsstränge jeweils eine Abmessung von 50 bis 400 g/9000 m (Denier) haben und einander unter Bildung von Fensterbereichen überkreuzen, die durch die überkreuzten Ketten- und Schuß-Verstärkungsstränge eingegrenzt sind,
wobei die Ketten- und Schußverstärkungsstränge an ihren Kreuzungspunkten aneinander fixiert sind,
wobei das Verstärkungsgewebe mit Leinenbindung einen Offenheitsgrad von 55 bis 90 % hat und der Offenheitsgrad definiert ist als das Verhältnis der Gesamtfläche der Fensterbereiche zu der Gesamtfläche des Verstärkungsgewebes mit Leinenbindung, und das Verstärkungsgewebe mit Leinenbindung frei von verlorenen Strängen ist, und wobei das Verstärkungsgewebe mit Leinenbindung erhalten wird indem ein Webstoff mit Leinenbindung hergestellt wird, der Verstärkungsstränge und verlorene Stränge umfaßt, wobei das Verhältnis der Anzahl der verlorenen Stränge zu der der Verstärkungsstränge eine gerade Zahl ist, die Verstärkungsstränge des Webstoffes mit Leinenbindung an ihren Überkreuzungspunkten durch Heißpreßbehandlung oder Bindemittelbehandlung fixiert werden und die verlorenen Stränge herausgelöst oder zersetzt werden,
(2) Einkapseln des Verstärkungsgewebes mit Leinenbindung in mindestens einer der Schichten aus fluoriertem Polymeren einer Folie, die mindestens zwei Schichten eines fluorierten Polymeren mit seitenständigen Sulfonat-Vorläufergruppen, Carboxylat-Vorläufergruppen oder ein Gemisch dieser aufweist, in einer der Schmelzbearbeitung zugänglichen Form und
(3) Umwandeln dieser Sulfonat-Vorläufergruppen, dieser Carboxylat-Vorläufergruppen oder des Gemisches dieser in Sulfonatgruppen, Carboxylatgruppen oder ein Gemisch dieser Gruppen.

## Revendications

1. Membrane échangeuse d'ions renforcée, comprenant au moins deux couches d'un polymère fluoré comportant en position latérale des groupes sulfonate, des groupes carboxylate ou leurs mélanges, et un tissu tissé de renforcement à armure toile comprenant des torons de renforcement de chaîne et de trame en un copolymère fluoré, ces torons de renforcement de chaîne et de trame se croisant les uns les autres pour former des portions ouvertes définies par les torons de renforcement de chaîne et de trame qui se croisent, le tissu tissé de renforcement à armure toile étant encapsulé dans au moins l'une des couches,
le tissu tissé de renforcement à armure toile étant obtenu à partir d'un tissu tissé à armure toile comprenant des torons de renforcement et des torons sacrificiels, le rapport du nombre des torons sacrificiels à celui des torons de renforcement étant un nombre pair, ces torons de renforcement du tissu tissé à armure toile étant fixés, au niveau de leurs points de croisement, par un traitement de compression à chaud ou un traitement par un liant, les torons sacrificiels étant dissous ou décomposés,
le tissu tissé de renforcement à armure toile ayant un degré de vide de 55 à 90 %, le degré de vide étant défini par le rapport de l'aire totale des portions ouvertes à l'aire globale du tissu tissé de renforcement à armure toile,
la membrane étant exempte de torons sacrificiels entre les torons contigus de renforcement de chaîne et entre les torons contigus de renforcement de trame du tissu tissé de renforcement à armure toile, et étant exempte de canaux formés par enlèvement des torons sacrificiels.

2. Membrane selon la revendication 1, dans laquelle une couche poreuse perméable aux gaz et aux liquides, ne faisant pas office d'électrode, est fixée à au moins une surface de ladite membrane.

3. Membrane selon la revendication 1, dans laquelle la surface d'au moins une couche de la membrane est rendue rugueuse de façon à avoir une structure concave-convexe telle que l'on ait au moins 20 portions concaves-convexes par longueur unitaire de 1 mm, chacune de ces portions ayant une rugosité non inférieure à 0,05 µm.

4. Membrane selon la revendication 1 ou 2, dans laquelle lesdits torons de chaîne et de trame comprennent chacun un polymère perfluoré, chacun ayant un titre de 50 à 400 g/9000 m (deniers).

5. Procédé pour produire une membrane échangeuse d'ions renforcée, qui comprend les étapes consistant :
(1) à mettre à disposition un tissu tissé à armure toile, renforcé, comprenant des torons de chaîne et des torons de trame de renforcement, en un polymère fluoré, ces torons de chaîne et ces torons de trame de renforcement ayant chacun un titre de 50 à 400 g/9000 m (deniers) et se croisant les uns les autres pour former des portions ouvertes définies par les torons de trame et de chaîne de renforcement, croisés,
lesdits torons de chaîne et de trame de renforce-ment étant fixés les uns aux autres en leurs points de croisement,
le tissu tissé à armure toile de renforcement ayant un degré de vide de 55 à 90 %,_{,} le degré de vide étant défini par le rapport de l'aire totale des portions ouvertes à l'aire totale du tissu tissé à armure toile de renforcement,
le tissu tissé à armure toile de renforcement étant exempt de torons sacrificiels,
le tissu tissé à armure toile de renforcement étant obtenu à partir d'un tissu tissé à armure toile comprenant des torons de renforcement et des torons sacrificiels, le rapport du nombre des torons sacrificiels à celui des torons de renforcement étant un nombre pair, les torons de renforcement du tissu tissé à armure toile étant fixés, en leurs points de croisement, par un traitement par compression à chaud ou par un traitement par un liant, les torons sacrificiels étant dissous ou décomposés ;
(2) à encapsuler le tissu tissé à armure toile de renforcement dans au moins l'une des couches de polymère fluoré d'un film comprenant au moins deux couches d'un polymère fluoré comportant en position latérale des groupes précurseurs de sulfonates, des groupes précurseurs de carboxylates ou leurs mélanges sous une forme pouvant être réalisée à l'état fondu ; et
(3) à convertir les groupes précurseurs de sulfonates, les groupes précurseurs de carboxylates ou leurs mélanges respectivement en des groupes sulfonate, des groupes carboxylate ou leurs mélanges.
